# EUROPEAN PATENT SPECIFICATION

(11) **EP 0 271 960 B1**
(45) Date of publication and mention of the grant of the patent: **02.03.1994**
(21) Application number: 87202501.0
(22) Date of filing: 14.12.1987
(51) Int. Cl.: G02F 1/133, G02F 1/33, H04N 3/12

(54) **Matrix display devices**
Matrix-Anzeigevorrichtungen
Dispositifs d'affichage à matrice

(30) Priority: 19.12.1986 GB 8630410
(43) Date of publication of application: 22.06.1988
(73) Proprietor: PHILIPS ELECTRONICS UK LIMITED, Croydon CR9 3QR (GB); Philips Electronics N.V., 5621 BA Eindhoven (NL)
(72) Inventor: Nicholas, Keith Harlow, Redhill Surrey RH1 5HA (GB)
(74) Representative: Williamson, Paul Lewis

(56) References cited:
- JP-A-61 166 590
- PATENT ABSTRACTS OF JAPAN, vol. 10, no. 41 (P-429)[2098], 18th February 1986; & JP-A-60 188 924
- PATENT ABSTRACTS OF JAPAN, vol. 10, no. 48 (P-431)[2105], 25th February 1986; & JP-A-60 192 920

## Description

This invention relates to a matrix display device comprising a plurality of display elements arranged in a matrix and defined by respective electrodes carried on opposed substrates between which is disposed an electrically excitable display material which, together with the electrodes, exhibits capacitance in operation, and in which the display elements are controlled by selectively applying voltage to the respective electrodes via respective switching means carried on one substrate.

In a known example of such a display device in which the electrically excitable display material comprises liquid crystal material, each display element is defined by a respective electrode carried on the one substrate and an opposing portion of an electrode common to all display elements carried on the other substrate. The switching means comprise thin film transistors (TFTs) and are arranged in an array of rows and columns. A plurality of data lines are each connected to a respective column of the TFTs and a plurality of gate lines are each connected to a respective row of the TFTs.

The device is driven by repetitively scanning the gate lines in sequential fashion so as to turn on all TFTs in each row in turn and applying picture (data) signals to the data lines for each row in turn so as to build up a display picture. When each line of TFTs is turned "on", the TFTs in that line form conductive paths between the data lines and the one electrode of each of the display elements of that line which thus charge up to the applied data voltage. When the gate line voltage falls at the termination of energisation of that line, the TFTs in that line are all turned "off". This isolates the display element electrodes and charge is stored on each display element in view of the inherent capacitance of the display element structure although storage capacitors may also be used. The display elements stay in the state into which they were driven, determined by the applied data voltage, until the next time the associated TFTs are turned on, in the case of TV signals, this being every field period.

This kind of display device may be used for datagraphic purposes or to display TV pictures by sampling each line in the video signal and placing the appropriate voltages on the data lines.

Particularly when the display device is being used to display TV pictures, a grey scale capability is needed. In known devices this is achieved in practice utilising the display element's transmission/voltage characteristic and by adjusting the voltage applied across each display element accordingly. The liquid crystal material employed is chosen to have a voltage switching characteristic that exhibits an exponential slope and varies slowly with voltage applied thereacross. This necessary restriction on the kind of liquid crystal matter used to one having a gradual switching characteristic also results in limitations of other properties of the material such as viewing angle in particular.

It is an object of the present invention to provide a matrix display device, and particularly a liquid crystal display device, in which grey scale levels can be readily achieved and in which the aforementioned drawback associated with known devices is avoided at least to some extent.

According to the present invention, there is provided a matrix display device comprising a plurality of display elements arranged in a matrix and defined by respective electrodes carried on opposed substrates between which is disposed an electrically excitable display material which, together with the electrodes, exhibits capacitance in operation, and in which the display elements are controlled by selectively applying voltages to the respective electrodes via respective switching means carried on one substrate adjacent to the display element electrodes on the substrate, the electrically excitable material having a switching voltage whereby a display effect produced by a display element changes when the voltage applied thereto reaches a predetermined level, which is characterised in that the display element electrodes on the one substrate carrying the switching means each comprise a plurality of separate electrodes arranged in a planar array which define a plurality of sub-elements and which are each capacitively coupled to the respective switching means by means of a respective series capacitor carried on that substrate, the series capacitors each comprising an extension of the respective sub-element electrode, an overlapping portion of an extension of an output electrode of the switching means, and an intervening dielectric insulator layer, the area of the overlapping portions of the output electrode extension and the extension of the sub-element electrode for each of the series capacitors being selected in relation to the capacitance of the respective sub-element such that the ratio of the capacitance of each sub-element to the capacitance of its respective series capacitor differs from one sub-element to another whereby the sub-elements have different voltage operating thresholds.

Such a display device avoids the need to use a particular electro-optical display material, for example a liquid crystal material, which has a gradual switch requirement, that is, a gradual change from one state to another. Other electro-optical materials can be employed so that the restrictions on various other properties associated with the use of a particular material having a gradual switch requirement can be removed.

This advantage stems from the fact that each display element is in effect split into a plurality of sub-elements (i.e. sub-regions), defined by the plurality of electrodes, having different thresholds. As the display element electrodes are arranged in a planar array, a constant thickness of the display material can conveniently and reliably be obtained over the area of the display element with the individual sub-elements each having a similar thickness of display material for simplicity and ensuring uniformity of their operational characteristics in this respect. Each display element is capable of displaying a range of grey scale levels, the levels being dependent on the number of sub-elements having been switched to a visibly different state which in turn is determined by the number of the separate electrodes of each display element having attained or exceeded the switching voltage of the display material. Because the capacitance ratios of the sub-elements of the display element and their respective series capacitors differ, the number of the sub-elements attaining the required switching voltage varies in accordance with the voltage supplied via the switching means. Each series-connected capacitive sub-element and associated capacitor acts in effect as a capacitive potential divider circuit and the plurality of such circuits can be regarded as connected in parallel with one another between a source of applied voltage. A certain level of applied voltage is required to cause a threshold voltage to be reached across each one of the sub-elements. As the applied voltage is increased, the number of sub-elements switched, that is, caused to change state by virtue of the threshold being attained, and hence the proportion of the display element total area turned "on" is correspondingly increased. The area of each of the display elements is small, so that, under typical viewing circumstances, a viewer cannot distinguish its sub-elements separately and instead perceives the display element as a dot whose relative brightness, corresponding to grey scale level, varies proportionately in accordance with the number of sub-elements switched. As a result, different grey-scale levels can be achieved in accordance with applied voltage. In this respect, and considering the case where, for example, the display material comprises liquid crystal material which is capable of being switched between a state presenting a light appearance to a state presenting a dark appearance to a viewer upon the application thereacross of a threshold voltage, as the number of the plurality of electrodes of each display element attaining thethreshold voltage increases the display element darkens, and, conversely, as the number decreases, the display element lightens.

As an alternative to the kind of liquid crystal matrix display device in which switching means, e.g. TFTs, are provided for controlling the display elements, there is proposed in JP-A-61-166590 a passive matrix display device which relies on the use of bistable ferroelectric material and in which the display elements are structured such that sub-regions thereof are selectively energised to enable a gradational display effect to be produced from each display element. The described device is limited to the use of bistable ferroelectric material. Moreover, each display element has a structure comprising a pair of electrodes carried on opposing substrates in which one of the electrodes is covered by a stepped layer of insulator with each step defining one of the sub-regions so that the thickness of the ferroelectric material layer is different for each sub-region.

In GB-A-1390925 there is described a digital matrix liquid crystal display device in which each display element electrode on one substrate is sub-divided into a plurality of separate electrodes of different areas for digital display. The separate electrodes are connected to a so-called thin film switching circuit operable with digital brightness information signals.

In an embodiment of the invention, the display material comprises liquid crystal material. The advantages afforded by the invention when applied to liquid crystal display devices are particularly beneficial. Because of the manner in which grey-scale capability is achieved, the liquid crystal voltage characteristics are less critical and the invention enables liquid crystal materials other than those demonstrating a gradual switching requirement to be used offering a wider choice of other properties than previously. Hence materials capable of giving in operation improved viewing angle characteristics may be utilised if desired. Preferably, however, the liquid crystal material chosen has a voltage switching characteristic which is reasonably sharp.

It is envisaged that the invention might also be used with similar advantages in display devices using other electro-optical, electrically excitable, display materials and exhibiting a capacitance effect is operation, for example an electroluminescent or electrochromic material.

In the case, for example, where the switching means of the display device comprise TFTs, the invention offers a further advantage in that as each display element is constituted by a plurality of separate sub-elements defined by respective ones of a plurality of electrodes, each being connected in series with a further capacitor, the overall capacitance of a display element compared with that of a known kind of display device using single electrodes defining each display element of equivalent size is smaller and hence the size of the TFTs necessary could be reduced allowing the ratio of the display element area to TFT area to be increased.

The number of the plurality of sub-elements, and accordingly the number of said plurality of electrodes, is preferably chosen in accordance with the number of grey scale levels to be displayed. Typically, for TV picture displays, sixteen grey scale levels are desirable and in this case fifteen sub-elements may be provided for each display element, the sixteenth grey scale level being provided by the display element being on its fully "off" condition.

In addition to the said plurality of sub-elements, each display element may include a further one or more sub-elements which are similarly capacitively coupled by means of a series capacitor to the switching means with the ratios of the capacitances of these further sub-elements and their respective series capacitors being the same as one or respective ones of those ratios of said plurality of sub-elements and their respective series capacitors. When therefore a certain voltage is applied which is sufficient to switch one of said plurality of sub-elements, one or more of the further sub-elements may in addition be switched. In this way, a single grey scale level may be provided by more than one sub-element of the display element. The provision of such further sub-elements can serve in obtaining the desired grey scale levels so that rather than relying solely on the switching of a particular one of the said plurality of sub-elements to achieve a different grey scale level, the different grey scale level may be obtained by one or more of these further sub-elements being switched simultaneously with that particular sub-element.

Whilst the invention is capable of offering a useful range of grey scale levels, further and intermediate grey scale levels could additionally be achieved if desired by utilising at the same time the display material's switching characteristics as previously, assuming the material chosen has the necessary properties in this respect, to give a combination grey scale effect. Its switching characteristics need not be as gradual as those required in the known devices and can be significantly sharper.

In order to provide a desirable grey scale level variation, as perceived by a viewer of the display device, in a convenient manner, the respective areas of the said plurality of electrodes of each display element, and hence the respective areas of the sub-elements they serve to define, preferably vary with respect to one another in accordance with grey scale levels to be perceived. As an approximation, the human eye's characteristic response to brightness level variations is generally logarithmic. In this case, the respective areas of the said plurality of electrodes of successively switched sub-elements are therefore preferably chosen to have an approximately logarithmic relationship, thus matching the sub-elements to the eye's perception of linear grey scale.

With the sizes of the areas of the plurality of electrodes differing in this manner, the capacitances of the sub-elements defined thereby will likewise differ as a consequence. Therefore it is necessary to determine the value of the capacitance of the capacitors in series with the sub-elements so that the required differences between the ratios of the capacitances of the sub-elements and their series capacitors are obtained.

In an embodiment of the invention, in which liquid crystal material may be used as the display material, the series capacitors connected to the sub-elements of each display element are connected to the output of one common switching means, for example, a thin film transistor. Each of the plurality of electrodes of a display element is connected to a respective conductive layer, constituting part of their series capacitor, which conveniently may be formed as an extension of the electrode and integrally therewith, adjacent to the periphery of the display element. The output electrode of the switching means comprises a conductive strip which extends over the conductive layers connected to the plurality of electrodes and is insulated therefrom, the conductive layers and the respective overlying portions of the conductive strip constituting the series capacitors. For convenience, the conductive strip may be formed of substantially constant width and the capacitance value of each series capacitor is determined by the area of its conductive layer lying under the strip. Where the display element is generally rectangular, the aforementioned conductive strip preferably extends adjacent two edges of the display element, this configuration facilitating arrangement of the plurality of electrodes.

In an alternative embodiment, a plurality of separate switching means, for example thin film transistors, are provided for each display element, the outputs of the switching means being connected to a respective one or more of the series capacitors of the display element. For example, in the case where the switching means comprise TFTs, the output of one TFT may be connected to two series capacitors, the output of another TFT connected to one or more other series capacitors and so on. Possibly a different TFT could be provided for each series capacitor. Whilst the provision of additional TFTs would complicate construction of the display device to some extent, particularly in the latter example where the number of TFTs corresponds to the number of sub-elements of the display element, the arrangement does offer an important advantage. In the case of a single TFT being associated with a display element, failure of the TFT results in catastrophic failure of the element. When, on the other hand, a plurality of TFTs are used as described, failure of one TFT, or perhaps even more than one, does not result in catastrophic failure of the display element and the element may still be used to some effect. The probability of the plurality of TFTs failing is very remote.

Switching means other than thin film transistors may be employed for example MIM (metal-insulator-metal) or diode thin film structures.

The other substrate of the display device may carry a common electrode or a number of separate electrodes in known manner.

A matrix display device, and in particular a matrix liquid crystal display device, in accordance with the invention will now be described, by way of example, with reference to the accompanying drawings in which:-
Figure 1 is a simplified block diagram of a liquid crystal display system suitable for displaying TV pictures and including a colour liquid crystal display panel having a matrix of display elements;
Figure 2 is a schematic cross-sectional view through a part of an embodiment of a colour liquid crystal display panel for use in the system of Figure 1 showing a portion of a typical one of the display elements and in accordance with the present invention;
Figure 3 is a plan schematic view showing an electrode configuration of the one display element of Figure 2;
Figure 4 illustrates diagrammatically the electrical circuit of a typical one of the display elements of the display panel of Figure 2, and
Figure 5 illustrates diagrammatically an alternative circuit of a typical one of the display elements.

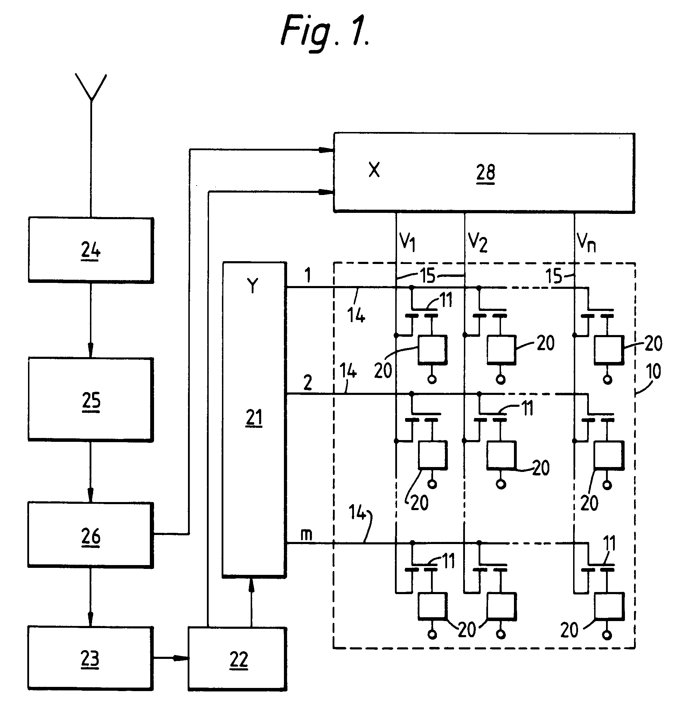

Referring to Figure 1, there is shown schematically a block diagram of a LCD-TV display system including a display device according to the invention which in this particular embodiment comprises an active matrix addressed liquid crystal display panel 10. The panel 10 consists of m lines (1 to m) with n horizontal display (picture) elements 20 (1 to n) in each line. In practice, the total number of display elements (m x n) in the matrix array may be 100,000 or more. Each display element 20 has an associated amorphous silicon thin film transistor 11 acting as a switching element. The gates of all the TFTs in each line are connected to a row (Y) electrode 14 and the source electrodes of each TFT in a column are connected to a column (X) electrode 15, there being m row electrodes 14 and n column electrodes 15. The drains of the TFTs 11 are connected to respective electrodes of the display elements in a manner which will be described. A common counter electrode for the display elements is carried by a substrate spaced from the substrate carrying the TFTs and the associated electrodes of the display elements with liquid crystal material disposed therebetween. The liquid crystal material modulates light according to voltage applied thereacross. Colour filters in registration with the display elements produce a colour display using tri-colour additive principles.

Line addressing of the matrix array of display elements 20 is achieved by applying a gate voltage to a row electrode 14. This turns on every TFT in that row of the matrix. The row electrodes are sequentially addressed to provide line scanning. Using one line at a time addressing each transistor is switched on for a time Tₗ during which video information is transferred to display elements. During the remainder of the field time Tf (Tf being approximately equal to m.Tₗ) the transistor is off and its function is to keep the video voltage across the liquid crystal by virtue of the natural capacitance of the liquid crystal display element (C_{LC}). The liquid crystal material is effectively directly driven, and thus any number of lines could be addressed, depending on the switching characteristics of the TFT.

As can be seen in Figure 1, the Y, row, electrodes 14 are driven by a digital shift register 21 supplied with regular timing pulses from a clock circuit 22 which is fed with line synchronising pulses from a synchronisation separator 23 derived from the incoming signals via a tuner 24, IF circuit 25 and video amplifier 26.

Video information signals are supplied to the X, column, electrodes 15 simultaneously from an analogue shift register circuit 28, comprising one or more shift registers, supplied with video signals from the video amplifier 26 and timing pulses from the clock circuit 22 in synchronism with line energisation. The shift register circuit samples the corresponding line in the video signal and places the appropriate voltages on the X electrodes 15 to the TFT source electrodes. A line of "on" TFTs form conducting paths between the X electrodes 15 and the display element electrodes connected to the TFT drains so that the liquid crystal elements of the line charge up to the source voltages. When the Y, gate, electrode 14 voltage falls the line of TFTs turns off. This isolates the liquid crystal display elements and charge is stored on the elemental capacitors. The display elements thus stay in the state into which they were driven, determined by the voltage, V_{LC}, across them, until the next time their associated TFTs are turned on by appropriate energisation of the respective Y electrode 14.

The purpose of the X shift register circuit 28 is to provide serial to parallel conversion appropriate to the line at a time addressing of the panel 10. For a full resolution TV display, two shift registers would be needed. During a line time, video information for one line is shifted into one register while at the same time the video information of the previous line is transferred from the other register to the Y electrodes 14 of the panel. During the next line time, the first register is emptied into the panel and the second register is refreshed with video information for the next line. In a half vertical resolution TV display, both fields consituting one TV frame are tansferred to the same set of picture elements (i.e. fields are shown superimposed rather than being interlaced as in, for example, a CRT TV display). Hence, the polarity of the video signal supplied to the shift register 28 conveniently is changed at the end of every field in order to reduce the possibility of degradation of the liquid crystal material.

The above description of a liquid crystal TV display system using an active matrix addressed liquid crystal display panel and its general operation has been kept deliberately simple. Similar TV display systems are now very well known and have been widely described and documented elsewhere. For this reason, it is thought unnecessary here to describe in greater detail the general constructional principles and operation. For further information, reference may be made to, for example, US Patent Specification No. 3862360, British Patent Specification No. 2159656 or the paper entitled "Liquid Crystal Matrix Displays" by Lechner et al, published in Proceedings of the IEEE, Vol. 59, No. 11, November 1971, pp 1566-1579.

In such known liquid crystal display panels using TFTs each individual display element comprises a single electrode connected to the output of the TFT and carried on the same substrate as the TFT which, together with a respective portion of an opposing common electrode carried on the facing substrate defines the display element. Differences in the displayed grey scale level, determined by the magnitude of the video signal supplied to the TFT's input, depend on the characteristics of the liquid crystal material, it being necessary for this purpose to employ a liquid crystal material having gradual switching characteristics, usually having an exponential slope, so that its transmission varies slowly with applied voltage.

In the present embodiment, however, and in accordance with the invention, each display element 20 is sub-divided into a plurality of sub-elements and comprises a plurality of electrodes rather than a single electrode. This plurality of individual electrodes in effect defines with respective sub-regions of the portion of the common electrode associated with the display element and liquid crystal material therebetween a plurality of display sub-elements. Together, the sub-elements occupy an area substantially similar to that of a conventional single display element so that there need be no loss in resolution capability. Each display element is supplied with video signals in the same manner as before via X conductors 15 and controlled by gating signals on Y conductors 14 so as to build up a picture from the display elements. However, rather than relying solely on the voltage switching characteristic of the liquid crystal material to provide grey scale levels, this is achieved instead by selective control of the number of sub-elements switched at any one time from, for example, a first state in which the material is transmissive, to a second, non-transmissive state. With most of the sub-elements of a display element in the second state, therefore, the display element is perceived by a viewer to appear relatively dark and with most of the sub-elements in the first state, the display element appears relatively light. Thus, by varying the relative numbers of the sub-elements in the first and second states, a variety of grey scale levels can be achieved using a kind of dot matrix principle.

The desired control of each sub-element in accordance with a required grey scale level is accomplished using capacitive effects. The display sub-elements, like conventional display elements, behave as capacitors. Each of the sub-elements is connected to a point to which the video signal is supplied, that is, the output of an associated TFT, via a respective series capacitor. The ratios of the capacitances of each sub-element and its respective series capacitor are predetermined and, at least for some of the series combinations, are different from one another. The series combination of a sub-element and capacitor acts in the manner of a potential divider circuit. Because the capacitance ratios of the series combinations differ, a particular video signal voltage applied to all the series capacitors at their sides remote from their associated sub-elements will, for example, result in certain ones of the plurality of electrodes attaining the necessary liquid crystal switching (threshold) voltage causing these sub-elements to change state. If the video signal voltage is progressively increased, then progressively more sub-elements are caused to change state. Conversely, if the video signal voltage is progressively decreased, then the number of sub-elements in the changed state correspondingly decreases. The numbers of changed sub-elements at any one time determines the grey scale level.

It is no longer essential therefore that the liquid crystal material has a gradual switching characteristic. The only condition on the choice of material employed for optimum results is that preferably it has a reasonably sharp switching characteristic. However, by choosing a liquid crystal material which still has some gradual switching characteristic even though perhaps sharper than usual, it is possible to achieve additional grey scale variations utilising the sub-elements' voltage/transmission curve characteristic in a manner similar to that used previously for display elements.

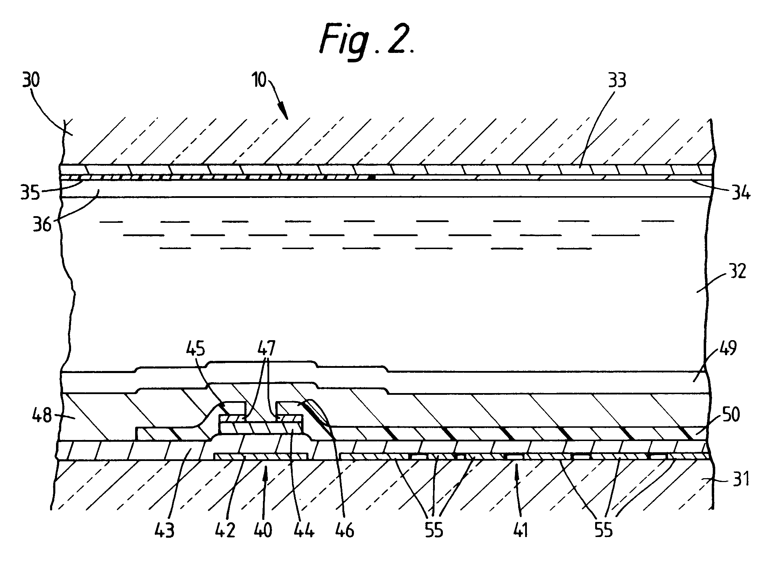

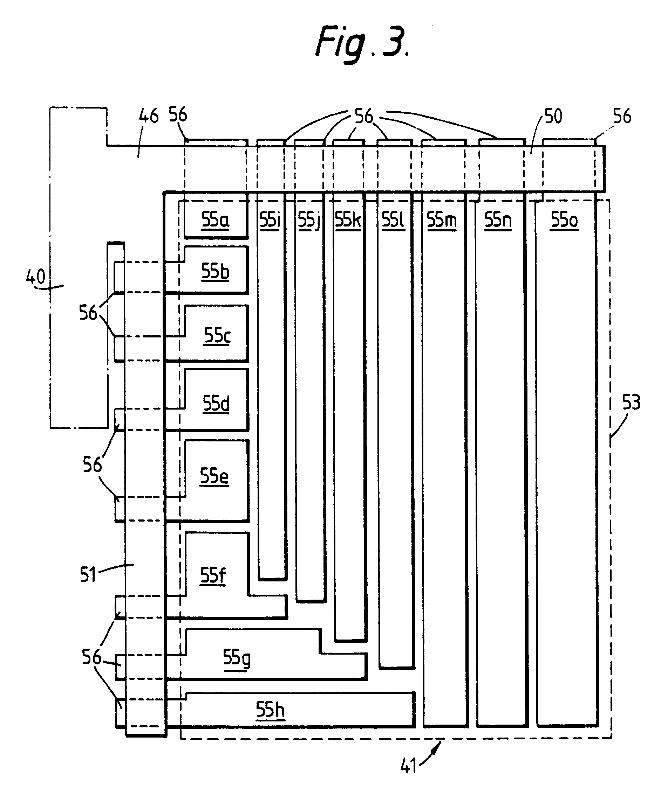

With regard to Figure 2, there is shown a cross-section through a part of a typical display element of a particular embodiment of a liquid crystal panel according to the invention for the system of Figure 1 in which each display element of the panel comprises a plurality of electrodes defining sub-elements connected in series with a respective capacitor as described above. Figure 3 is a plan view of part of the display element shown in Figure 2 illustrating the plurality of electrodes and their associated series capacitors of the typical display element.

Referring to Figure 2 especially, the panel, 10, comprises two spaced apart glass substrates 30 and 31 to define a gap in which twisted nematic liquid crystal material 32 is disposed. As is customary, polarising layers (not shown) would be provided on the outer surfaces of substrates 30 and 31. The upper substrate 30 carries on its inner surface a continuous ITO (Indium Tin Oxide) electrode layer 33 common to all display elements.

Over this electrode 33 are disposed discrete areas of colour filter layers 34 and adjacent light shielding layers 35 of insulative material in the form of a matrix. The colour filter layers 34 overlie respective display elements and are arranged in groups of three adjacent filter layers of red, green and blue filter material respectively so that the outputs from corresponding groups of three display elements can combine to give a full colour display. The layers 34 and 35 are in turn covered by an orientation layer 36 of polymer material.

The lower substrate 31 carries TFTs, together with associated electrodes of the display elements, generally designated 40 and 41 respectively. Each TFT comprises a metal gate electrode 42 deposited directly on the substrate 31, a SiN gate dielectric insulator layer 43, an amorphous silicon layer 44 overlying the gate, two, laterally spaced, n+ layers 47 on the layer 44 and source and drain electrodes 45 and 46 extending over the layers 47 in the manner shown. An insulator serving as a passivation layer 48 extends over the structure as shown. The insulator layer 48 is in turn covered by an orientation layer 49 of polymer material similar to the layer 36.

The source electrode 45 is interconnected with the source electrodes of other TFTs in the same column 15 and the gate electrode 42 is interconnected with the gates of other TFTs in the same row 14, their connections being formed integrally with the electrodes concerned.

Referring now also to Figure 3 the drain electrode 46 of each TFT is formed with an extension conductive strip layer integrally therewith. This extension strip has two arms 50 and 51 of substantially constant width which extend at right angles to one another and alongside two adjacent sides of the display element area 53, represented in the figure by a dotted line, which, in this example, is rectangular in shape with dimensions around 350 x 300 micrometres.

The arms 50 and 51 are deposited over the gate insulator layer 43. Beneath this layer 43, and directly on the glass substrate 31, there is provided a plurality of separate display element electrodes 55a to 55o arranged co-planarly which together occupy the display element area 53 with only relatively small gaps therebetween and together serve to constitute one display element. Each of these electrodes 55a to 55o defines with a respective opposite portion of common electrode 33 and the liquid crystal material 32 therebetween a sub-element of the display element.

The electrodes 55a to 55o are formed with respective integral extension layers 56 which extend beneath the extension layer of the TFTs drain electrode and are separated therefrom by the insulator layer 43, the extensions of electrodes 55a to 55h passing beneath the arm 51 and the electrodes 55i to 55o passing beneath the arm 50. These electrode extensions 56 together with the overlying portions of dielectric insulator layer 43 and arms 50 and 51 constitute capacitors and it will be appreciated that these capacitors are in series connection between the drain electrode 46 of the TFT and respective ones of the capacitive display sub-elements comprising electrodes 55, liquid crystal material 32 and respective portions of electrode 33.

As can be seen in Figure 3, fifteen electrodes 55 are provided, in effect splitting the display element into fifteen sub-elements, enabling sixteen grey scale levels to be achieved by successive switching operation of each of the sub-elements with all sub-elements in their "off" condition providing the sixteenth level.

In order to provide the appropriate visual distinctions between grey scale levels, the areas of successively switched electrodes 55a to 55o in that order, and thus the sub-elements they serve to define differ from one another and follow an exponential progression. In this way, and because of the eye's characteristic logarithmic response to brightness level variations, the areas of the sub-elements are matched to the eye's perception of linear grey scale. The capacitances of the sub-elements therefore differ correspondingly. The ratio of each sub-element's capacitance to the capacitance of its associated series connected capacitor differ in each case. Bearing in mind that the capacitance of each sub-element is dictated to a large extent by the area of its electrode 55, the required differences in capacitance ratios are accomplished by appropriately tailoring the size of the extensions 56 of the electrodes beneath the arms 50 and 51 so as to obtain the desired value of capacitance of the series capacitors in each case. Typically, these series capacitors will have a capacitance per unit area value of 10 to 20 times the capacitance per unit area of the overall capacitance of the display element.

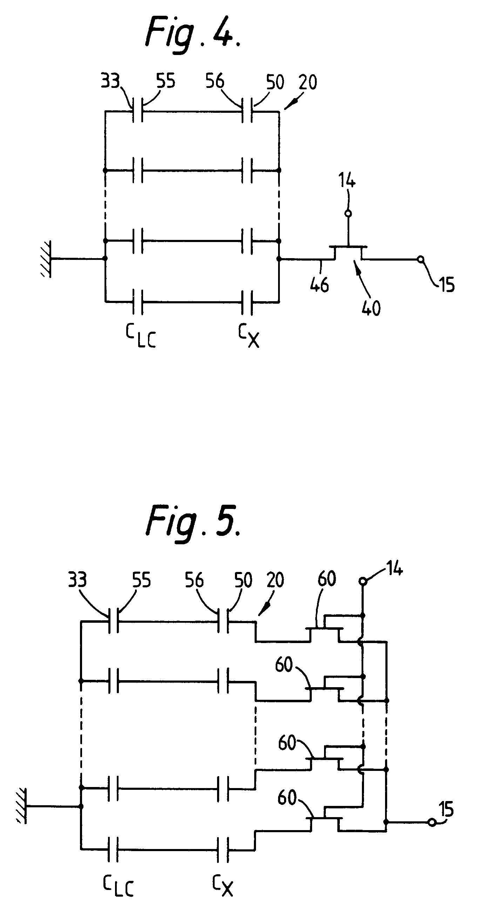

The arms 50 and 51 together with the opposing portions of electrode 33 and the liquid crystal material therebetween give rise to a certain capacitance in parallel with the sub-element capacitances whose effect tends to compensate to some extent for the smaller total display element capacitance. Any display effect which might be caused by these arms 50 and 51 during operation of the panel will be masked by the matrix light shield 35. The electrical circuit of the display element is represented in Figure 4 where the capacitance of the sub-elements and their associated series capacitors are denoted by the references C_{LC} and C_{X} respectively. It will be appreciated that, in practice, one of the plates of the sub-element capacitors are formed by respective regions of a common layer, the layer 33.

By adding a series capacitor, C_{X}, to each sub-element, C_{LC}, it is achieved that threshold voltage necessary to switch the liquid crystal material from a first state for example in which a sub-element is transmissive to a second state in which the sub-element is non-transmissive is reached across the relevant sub-elements only when the video signal present at the TFT drain electrode reaches the voltage appropriate to that grey scale level. In operation, as the voltage at the TFT drain electrode is increased, during successive fields, more of the sub-elements are switched from the first to the second state to form a grey scale.

Since grey scale level variations are achieved by appropriately switching the sub-elements between the two states, the choice of liquid crystal material is not so critical as previously, enabling greater possibilities of other properties such as viewing angle ranges. For particularly good results, the material preferably has a reasonably sharp voltage switching characteristic.

Although in the above described example, the ratios of capacitances of the sub-elements and their series capacitors are all different from one another, it would be possible for the ratios associated with two or more sub-elements to be the same so that those sub-elements concerned are caused to switch simultaneously, thus enabling two or more different sub-elements to act together in obtaining a grey scale level variation and permitting electrode patterns different to that shown in Figure 3. The number of grey scale levels achievable can be maintained by utilising the switching characteristics of the liquid crystal material as described previously.

With regard to Figure 5, there is shown the circuit configuration of a typical display element of an alternative embodiment of a display panel in accordance with the invention. In this embodiment, rather than having a single TFT driving all the sub-elements of a display element, each sub-element is driven by a respective and different TFT 60. The gates and sources of all these TFTs are connected to the same row 14 and column 15 respectively so that they receive the same gating and video signals. The operation of the display element remains as before. This arrangement has the advantage that, unlike the above-described embodiment in which failure of the single TFT would result in catastrophic failure of the display element, failure of one TFT, or perhaps even some TFTs, does not lead to complete failure of the display element as it would still be capable of providing a limited display capability. Thus yield is improved.

Whilst a separate TFT for each sub-element gives a higher degree of redundancy, a useful degree of redundancy could be achieved more simply by providing two or more TFTs for each display element and connecting each TFT to one or more respective sub-elements. For example, one TFT could be connected to one sub-element, another TFT connected to three different sub-elements, another TFT connected to two other sub-elements and so on.

In all these possible alternative arrangements, the interconnections between the TFT drains and their associated sub-elements will, of course, entail conductive layers of a different form to that shown in Figure 2. Although a number of TFTs have to be provided adjacent each display element, this does not necessarily mean that the area occupied by the TFTs will be unduly large compared with the area needed for the single TFT used in the first embodiment. Because the TFTs have to drive sub-elements rather than the entire display element they can be formed correspondingly smaller. In actual practice, the plurality of TFTs may comprise a commonly formed TFT structure which is split to define separate, smaller, TFTs.

## Claims

1. A matrix display device comprising a plurality of display elements (20) arranged in a matrix and defined by respective electrodes carried on opposed substrates (30,31) between which is disposed an electrically excitable display material (32) which, together with the electrodes, exhibits capacitance in operation, and in which the display elements are controlled by selectively applying voltages to the respective electrodes via respective switching means (11) carried on one substrate (31) adjacent to the display element electrodes on the substrate, the electrically excitable material having a switching voltage whereby a display effect produced by a display element changes when the voltage applied thereto reaches a predetermined level, characterised in that the display element electrodes on the one substrate (31) carrying the switching means each comprise a plurality of separate electrodes (55a-o) arranged in a planar array which define a plurality of sub-elements and which are each capacitively coupled to the respective switching means by means of a respective series capacitor (56,46) carried on that substrate, the series capacitors each comprising an extension (56) of the respective sub-element electrode, an overlapping portion of an extension (46) of an output electrode of the switching means, and an intervening dielectric insulator layer (43), the area of the overlapping portions of the output electrode extension and the extension of the sub-element electrode for each of the series capacitors being selected in relation to the capacitance of the respective sub-element such that the ratio of the capacitance of each sub-element to the capacitance of its respective series capacitor differs from one sub-element to another whereby the sub-elements have different voltage operating thresholds.

2. A matrix display device according to Claim 1, characterised in that the number of the plurality of sub-elements of each display element (20) is chosen in accordance with the number of grey scale levels to be displayed.

3. A matrix display device according to Claim 1 or Claim 2, characterised in that in addition to the plurality of sub-elements, each display element includes a further one or more sub-elements which are capacitively coupled by means of a respective series capacitor to the switching means with the ratios the capacitances of the further one or more sub-elements and their respective series capacitors being the same as one or respective ones of those ratios of said plurality of sub-elements and their respective series capacitors.

4. A matrix display device according to any one of Claims 1 to 3, characterised in that the respective areas of the said plurality of electrodes (55a-o) of each display element (20) vary with respect to one another in accordance with the grey scale levels to be displayed.

5. A matrix display device according to Claim 4, characterised in that the respective areas of the electrodes of successively switched sub-elements have an approximately logarithmic relationship.

6. A matrix display device according to any one of Claims 1 to 5, characterised in that the series capacitors of each display element are arranged adjacent the periphery of the display element (20,41).

7. A matrix display device according to any one of Claims 1 to 6, characterised in that the series capacitors connected to the sub-elements of each display element are connected to the output of a common switching means (40).

8. A matrix display device according to Claim 7, characterised in that each of the plurality of electrodes (55a-o) of a display element is connected to a respective conductive layer (56) constituting part of their series capacitor adjacent to the periphery of the display element and in that the output of the switching means (40) comprises a conductive strip (46) which extends over the conductive layers connected to the plurality of electrodes and is insulated therefrom by the insulator layer (43), the conductive layers and the respective overlying portions of the conductive strip constituting the series capacitors.

9. A matrix display device according to Claim 8, characterised in that each of said conductive layers (56) is formed as said extension of the electrode integrally therewith.

10. A matrix display device according to Claim 8 or Claim 9, characterised in that each display element is substantially rectangular (53) in shape and in that said conductive strip (46,50,51) extends adjacent two edges of the display element.

11. A matrix display device according to any one of Claims 1 to 6, characterised in that a plurality of separate switching means (60) are provided for each display element (20), the outputs of the switching means being connected to a respective one or more of the series capacitors of the display element.

12. A matrix display device according to Claim 11, characterised in that each of the plurality of electrodes of a display element is connected to a respective conductive layer constituting part of its series capacitor and located adjacent to the periphery of the display element and in that the output electrodes of the plurality of switching means are connected to respective conductors which extend over a respective one or more of said conductive layers and are insulated therefrom by the insulator layer, the conductive layers and the respective overlying portions of the conductors constituting the series capacitors.

13. A matrix display device according to Claim 12, characterised in that the series capacitors of each display element are arranged adjacent the edge of the display element.

14. A matrix display device according to any one of Claims 1 to 13, characterised in that the display material (32) comprises liquid crystal material.

15. A matrix display device according to any one of Claims 1 to 14, characterised in that the switching means comprise thin film transistors (11).

16. A matrix display device according to any one of Claims 1 to 16, characterised in that an electrode (33) common to all display elements is carried on the other substrate (30).

## Patentansprüche

1. Matrix-Anzeigeanordnung mit einer Anzahl von Anzeigelementen (20) in einer Matrixform, die durch jeweilige auf einander gegenüberliegenden Substraten (30, 31) angeordnete Elektroden definiert werden, und wobei zwischen den Substraten ein elektrisch erregbarer Anzeigewerkstoff (32) angebracht ist, der zusammen mit den Elektroden im Betrieb kapazitätstragend ist, wobei die Anzeigeelemente durch selektiv angelegte Spannungen an die jeweiligen Elektroden über jeweilige Schaltmittel (11) auf einem Substrat (31) neben den Anzeigeelementelektroden auf dem Substrat gesteuert werden, der elektrisch erregbare Werkstoff eine Schaltspannung führt, bei der sich ein von einem Anzeigeelement erzeugter Anzeigeeffekt ändert, wenn die daran zugeführte Spannung einen vorgegebenen Wert erreicht, dadurch gekennzeichnet, daß die Anzeigeelementelektroden auf dem einen Substrat (31) mit dem Schaltmittel je eine Anzahl getrennter Elektroden (55a...o) in einer Planarfeldanordnung enthalten, die eine Anzahl von Unterelementen definieren und mit dem betreffenden Schaltmittel über einen jeweiligen Reihenkondensator (56, 46) auf diesem Substrat je kapazitiv gekoppelt sind, wobei jeder Reihenkondensator eine Verlängerung (56) der betreffenden Unterelementelektrode, einen Überlappungsanteil einer Verlängerung (46) einer Ausgangselektrode des Schaltmittels und eine dielektrische Zwischen-Isolierschicht (43) enthält, der Bereich der überlappenden Anteile der Ausgangselektrodenverlängerung und der Verlängerung der Unterelementelektrode für jeden Reihenkondensator im Zusammenhang mit der Kapazität des betreffenden Unterelements derart gewählt wird, daß das Verhältnis der Kapazität jedes Unterelements zur Kapazität seines betreffenden Reihenkondensators von einem zum anderen Unterelement abweicht, wobei die Unterelemente verschiedene spannungsbetriebene Schwellen haben.

2. Matrix-Anzeigeanordnung nach Anspruch 1, dadurch gekennzeichnet, daß die Zahl der Anzahl von Unterelementen jedes Anzeigeelements (20) entsprechend der Zahl anzuzeigender Graustufenpegel gewählt wird.

3. Matrix-Anzeigeanordnung nach Anspruch 1 oder 2, dadurch gekennzeichnet, das neben der Anzahl von Unterelementen jedes Anzeigelement ein weiteres oder mehrere Unterelemente enthält, das bzw. die mittels eines jeweiligen Reihenkondensators mit dem Schaltmittel kapazitiv gekoppelt sind, wobei die Verhältnisse der Kapazitäten des weiteren einen oder der mehreren Unterelemente und ihrer betreffenden Reihenkondensatoren dieselben wie eines oder ein jeweiliges dieser Verhältnisse der Anzahl von Unterelementen und ihrer betreffenden Reihenkondensatoren sind.

4. Matrix-Anzeigeanordnung nach Anspruch 1 oder 3, dadurch gekennzeichnet, daß die jeweiligen Bereiche der Anzahl von Elektroden (55a...o) jedes Anzeigelements (20) sich gegeneinander entsprechend den anzuzeigenden Graustufenpegeln ändern.

5. Matrix-Anzeigeanordnung nach Anspruch 4, dadurch gekennzeichnet, daß die jeweiligen Bereiche der Elektroden aufeinanderfolgend geschalteter Unterelemente ein annähernd logarithmisches Verhältnis aufweisen.

6. Matrix-Anzeigeanordnung nach einem der Ansprüche 1 bis 5, dadurch gekennzeichnet, das die Reihenkondensatoren jedes Anzeigeelements beim Umkreis des Anzeigelements (20, 41) angeordnet sind.

7. Matrix-Anzeigeanordnung nach einem der Ansprüche 1 bis 6, dadurch gekennzeichnet, daß die mit den Unterelementen jedes Anzeigeelements verbundenen Reihenkondensatoren mit dem Ausgang eines gemeinsamen Schaltmittels (40) verbunden sind.

8. Matrix-Anzeigeanordnung nach Anspruch 7, dadurch gekennzeichnet, daß jede der Anzahl von Elektroden (55a...o) eines Anzeigeelements mit einer jeweiligen Leitschicht (56) als Teil ihres Reihenkondensators beim Umkreis des Anzeigeelements verbunden ist, und daß der Ausgang des Schaltmittels (40) einen Leitstreifen (46) enthält, der sich über die mit der Anzahl von Elektroden verbundenen Leitschichten erstreckt und durch die Isolierschicht (43) davon isoliert ist, wobei die Leitschichten und die betreffenden aufliegenden Anteile des Leitstreifens die Reihenkondensatoren darstellen.

9. Matrix-Anzeigeanordnung nach Anspruch 8, dadurch gekennzeichnet, daß jede der Leitschichten (56) als die Verlängerung der Elektrode integral damit gebildet ist.

10. Matrix-Anzeigeanordnung nach Anspruch 8 oder 9, dadurch gekennzeichnet, daß jedes Anzeigeelement eine im wesentlichen rechteckige Form (53) hat, und daß der Leitstreifen (46, 50, 51) sich neben zwei Rändern des Anzeigeelements erstreckt.

11. Matrix-Anzeigeanordnung nach einem der Ansprüche 1 bis 6, dadurch gekennzeichnet, daß eine Anzahl getrennter Schaltmittel (60) für jedes Anzeigeelement (20) vorgesehen ist, wobei die Ausgänge der Schaltmittel mit einem jeweiligen oder mit mehreren der Reihenkondensatoren des Anzeigeelements verbunden sind.

12. Matrix-Anzeigeanordnung nach Anspruch 11, dadurch gekennzeichnet, daß jede der Anzahl von Elektroden eines Anzeigeelements mit einer jeweiligen Leitschicht als Teil ihres Reihenkondensators und beim Umkreis des Anzeigelements verbunden ist, und daß die Ausgangselektroden der Anzahl von Schaltmitteln mit jeweiligen Leitern verbunden sind, die sich über eine jeweilige oder mehrere der Leitschichten erstrecken und durch die Isolierschicht davon isoliert sind, wobei die Leitschichten und die betreffenden aufliegenden Anteile der Leiter die Reihenkondensatoren darstellen.

13. Matrix-Anzeigeanordnung nach Anspruch 12, dadurch gekennzeichnet, daß die Reihenkondensatoren jedes Anzeigeelements neben dem Rand des Anzeigeelements angeordnet sind.

14. Matrix-Anzeigeanordnung nach einem der Ansprüche 1 bis 13, dadurch gekennzeichnet, daß das Anzeigematerial (32) Flüssigkristallmaterial enthält.

15. Matrix-Anzeigeanordnung nach einem der Ansprüche 1 bis 14, dadurch gekennzeichnet, daß die Schaltmittel Dünnschichttransistoren (11) enthalten.

16. Matrix-Anzeigeanordnung nach einem der Ansprüche 1 bis 16, dadurch gekennzeichnet, daß eine allen Anzeigeelementen gemeinsame Elektrode (33) auf dem anderen Substrat (30) angebracht ist.

## Revendications

1. Dispositif d'affichage à matrice comprenant une pluralité d'éléments d'affichage (20) disposés en une matrice et définis par des électrodes respectives supportées par des substrats opposés (30, 31) entre lesquels est disposée une matière d'affichage excitable électriquement (32) qui, conjointement avec les électrodes, présente de la capacité en fonctionnement, les éléments d'affichage étant commandés par application sélective de tensions aux électrodes respectives via des moyens de commutation respectifs (11) supportés par un substrat (31) adjacent aux électrodes de l'élément d'affichage sur le substrat, la matière excitable électriquement ayant une tension de commutation telle que l'effet d'affichage produit par un élément d'affichage change lorsque la tension qui y est appliquée atteint un niveau prédéterminé, caractérisé en ce que les électrodes de l'élément d'affichage sur le premier substrat (31) portant les moyens de commutation comprennent chacune une pluralité d'électrodes séparées (55a-o) agencées en une disposition planaire qui définissent une pluralité de sous-éléments et qui sont chacune couplées de manière capacitive aux moyens de commutation respectifs à l'aide d'un condensateur en série respectif (56, 46) supporté par ce substrat, les condensateurs en série comprenant chacun une extension (56) de l'électrode du sous-élément respectif, une partie chevauchante d'une extension (46) d'une électrode de sortie des moyens de commutation, et une couche isolante diélectrique intermédiaire (43), la surface des parties chevauchantes de l'extension de l'électrode de sortie et de l'extension de l'électrode des sous-éléments pour chacun des condensateurs en série étant choisie par rapport à la capacité du sous-élément respectif, de telle sorte que le rapport de la capacité de chaque sous-élément à la capacité de son condensateur en série respectif diffère d'un sous-élément à l'autre, si bien que les sous-éléments ont des seuils opératoires de tension différents.

2. Dispositif d'affichage à matrice selon la revendication 1, caractérisé en ce que le nombre des sous-éléments de la pluralité de sous-éléments de chaque élément d'affichage (20) est choisi en fonction du nombre de niveaux d'échelle de gris à afficher.

3. Dispositif d'affichage à matrice selon la revendication 1 ou 2, caractérisé en ce qu'en plus de ladite pluralité de sous-éléments, chaque élément d'affichage comprend un ou plusieurs autres sous-éléments qui sont couplés par voie capacitive à l'aide d'un condensateur en série aux moyens de commutation, les rapports des capacités du ou des autres sous-éléments et de leurs condensateurs en série respectifs étant les mêmes qu'un ou plusieurs rapports respectifs des rapports de ladite pluralité de sous-éléments et de leurs condensateurs en série respectifs.

4. Dispositif d'affichage à matrice selon l'une quelconque des revendications 1 à 3, caractérisé en ce que les aires respectives de ladite pluralité d'électrodes (55a-o) de chaque élément d'affichage (20) varient les unes par rapport aux autres conformément aux niveaux d'échelle de gris à afficher.

5. Dispositif d'affichage à matrice selon la revendication 4, caractérisé en ce que les aires respectives des électrodes de sous-éléments successivement commutés ont une relation approximativement logarithmique.

6. Dispositif d'affichage à matrice selon l'une quelconque des revendications 1 à 5, caractérisé en ce que les condensateurs en série de chaque élément d'affichage sont disposés à proximité de la périphérie de l'élément d'affichage (20, 41).

7. Dispositif d'affichage à matrice selon l'une quelconque des revendications 1 à 6, caractérisé en ce que les condensateurs en série connectés aux sous-éléments de chaque élément d'affichage sont connectés à la sortie d'un moyen de commutation commun (40).

8. Dispositif d'affichage à matrice selon la revendication 7, caractérisé en ce que chaque électrode de la pluralité d'électrodes (55a-o) d'un élément d'affichage est connectée à une couche conductrice respective (56) qui fait partie de leur condensateur en série adjacent à la périphérie de l'élément d'affichage et la sortie du moyen de commutation (40) comprend une bande conductrice (46) qui s'étend au-dessus des couches conductrices connectées à la pluralité d'électrodes et en est isolée par la couche isolante (43), les couches conductrices et les parties chevauchantes respectives de la bande conductrice constituant les condensateurs en série.

9. Dispositif d'affichage à matrice selon la revendication 8, caractérisé en ce que chacune desdites couches conductrices (56) se présente sous la forme de ladite extension d'électrode qui en fait partie intégrante.

10. Dispositif d'affichage à matrice selon la revendication 8 ou 9, caractérisé en ce que chaque élément d'affichage a une forme sensiblement rectangulaire (53) et ladite bande conductrice (46, 50, 51) s'étend à proximité des deux bords de l'élément d'affichage.

11. Dispositif d'affichage à matrice selon l'une quelconque des revendications 1 à 6, caractérisé en ce qu'une pluralité de moyens de commutation séparés (60) est prévue pour chaque élément d'affichage (20), les sorties des moyens de commutation étant connectées à un ou plusieurs des condensateurs en série respectifs de l'élément d'affichage.

12. Dispositif d'affichage à matrice selon la revendication 11, caractérisé en ce que chaque électrode de la pluralité électrodes d'un élément d'affichage est connectée à une couche conductrice respective faisant partie de son condensateur en série et située à proximité de la périphérie de l'élément d'affichage et les électrodes de sortie de la pluralité de moyens de commutation sont connectées à des conducteurs respectifs qui s'étendent par dessus une ou plusieurs couches respectives desdites couches conductrices et en sont isolées par la couche isolante, les couches conductrices et les parties surjacentes respectives des conducteurs constituant les condensateurs en série.

13. Dispositif d'affichage à matrice selon la revendication 12, caractérisé en ce que les condensateurs en série de chaque élément d'affichage sont disposés à proximité du bord de l'élément d'affichage.

14. Dispositif d'affichage à matrice selon l'une quelconque des revendications 1 à 13, caractérisé en ce que la matière d'affichage (32) est constituée d'un cristal liquide.

15. Dispositif d'affichage à matrice selon l'une quelconque des revendications 1 à 14, caractérisé en ce que les moyens de commutation comprennent des transistors en couche mince (11).

16. Dispositif d'affichage à matrice selon l'une quelconque des revendications 1 à 16, caractérisé en ce qu'une électrode (33) commune à tous les éléments d'affichage est supportée sur l'autre substrat (30).
